# EUROPEAN PATENT APPLICATION

(11) **EP 4 177 461 A1**
(43) Date of publication of application: **10.05.2023**
(21) Application number: 22151460.7
(22) Date of filing: 13.01.2022
(51) Int. Cl.: F03D 9/19

(54) **WIND TURBINE WITH HYDROGEN COMPRESSING MEANS AND HYDROGEN GENERATING WIND FARM**

(30) Priority: 05.11.2021 EP 21206668
(71) Applicant: Siemens Gamesa Renewable Energy A/S, 7330 Brande (DK)
(72) Inventor: Egedal, Per, 7400 Herning (DK); Kopfer, Marton, 7190 Billund (DK); Mortensen, Henrik Bach, 8800 Viborg (DK); Serup, Mikkel, 7330 Brande (DK); Soerensen, Johnny, 6920 Videbaek (DK); Thisted, Jan, 8830 Tjele (DK)
(74) Representative: SGRE-Association

(57) **Abstract**

The invention refers to a wind turbine (1) for a hydrogen generating wind farm (2), comprising a tower (3), a nacelle (4) rotatably attached to a top end (5) of the tower (3), a rotor (6), rotatably located within the nacelle (4), rotor blades (7) attached to the rotor (6) for being impinged by wind to generate rotation of the rotor (6) and a generator (8) mechanically coupled to the rotor (6) for transforming rotational energy of the rotor (6) into electrical energy. The wind turbine (1) further comprises a hydrogen inlet (9) for receiving hydrogen from a hydrogen import pipe (10) at a first pressure, a hydrogen outlet (11) for discharging hydrogen into a hydrogen export pipe (12) at a second pressure and a compressor system (13) with a compressor unit (14) for increasing the pressure of the hydrogen from the first pressure to the second pressure. Furthermore, the invention refers to a Hydrogen generating wind farm (2).

## Description

The present invention relates to a wind turbine for a hydrogen generating wind farm. The invention also relates to a hydrogen generating wind farm with a plurality of wind turbines.

Within the group of renewable energy sources, wind turbines play a substantial role for electric energy production. Wind turbines are frequently arranged in a so called *"wind farm"* of a series of wind turbines within a designated area. Basically, wind farms can be installed onshore or offshore. Onshore wind farms are easier to install, easier to maintain and a less costly investment. Offshore wind farms have the advantage of particularly constant power production due to more stable winds, less bureaucratic hurdles and less influence on human residency.

Besides conventional electric energy to grid solutions, hydrogen producing wind turbines are increasingly employed. With hydrogen technology, energy can be stored alternatively to batteries, pumped storage plants, rotational energy storages or the like.

Hydrogen producing wind turbines comprise an electrolyzer, which is powered by the electric energy that the wind turbine is producing, for generating hydrogen on site in an electrolysis. The electrolyzer is usually arranged on top of a base of an onshore wind turbine or inside the tower of an offshore wind turbine. Hydrogen producing wind turbines can be configured for exporting hydrogen and electric energy.

Current state of the art electrolyzers typically produce hydrogen with a pressure of up to 35 bar. However, for exporting the generated hydrogen through a pipeline system, a significantly higher output pressure may be required. Such pressure requirement can be dependent e.g., on the standards of the operator of the pipeline system, the length of the pipeline or the like. Especially for offshore wind farms, where the distance between the wind turbines and hydrogen storage tanks can be 100 km or more, a hydrogen pressure e.g., in the range of 50 - 100 bar, or more can be required.

For increasing the hydrogen pressure, compressor units can be used. For onshore wind farms, compressor units can be placed somewhere in the field between the wind turbines. In offshore wind farms, compressor units are provided on a separate platform, which is placed within the wind farm.

Such solutions have the disadvantage that the compressor units need to be powered by a wind turbine, wherein a secure power supply line must be installed. Moreover, the compressor unit requires additional space within the wind farm, usually with a foundation. For offshore wind farms, an extra platform is needed, which is cost intensive to install and laborious to maintain.

It is therefore the object of the present invention to eliminate or at least partially eliminate the disadvantages described above in the case of a wind farm. In particular, it is the object of the present invention to create a device and a wind farm which provide sufficient compression of hydrogen for an export pipeline in a simple and inexpensive manner.

The above object is achieved by the claims. Accordingly, the problem is solved by a wind turbine with the features of the independent claim 1 and by a wind farm with the features of the subordinate claim 10. Further features and details of the invention emerge from the subclaims, the description and the drawings. Features and details that are described in connection with the wind turbine according to the invention naturally also apply in connection with the wind farm according to the invention and vice versa, so that with regard to the disclosure of the individual aspects of the invention, reference is or can always be made to each other.

According to a first aspect of the invention, the object is achieved by a wind turbine for a hydrogen generating wind farm. The wind turbine comprises a tower, a nacelle rotatably attached to a top end of the tower, a rotor, rotatably located within the nacelle, rotor blades attached to the rotor for being impinged by wind to generate rotation of the rotor and a generator mechanically coupled to the rotor for transforming rotational energy of the rotor into electrical energy. According to the invention, the wind turbine further comprises a hydrogen inlet for receiving hydrogen from a hydrogen import pipe at a first pressure, a hydrogen outlet for discharging hydrogen into a hydrogen export pipe at a second pressure and a compressor system with a compressor unit for increasing the pressure of the hydrogen from the first pressure to the second pressure.

The tower is preferably configured as a tubular steel tower. It is preferred that the tower has a conical shape with the biggest diameter at a bottom end and the smallest diameter at the top end of the tower. By these means, stability of the tower is increased while material expenditure is reduced. It is further preferred that the tower comprises a plurality of tower sections, which are arranged along the longitudinal extension of the tower. The tower sections are preferably mutually connected by welding and/or flanges and bolts or the like. The tower sections can have a length between 15 meters and 40 meters, preferably between 20 meters and 30 meters.

The nacelle is located at the top end of the tower. Preferably, the nacelle is connected to the tower by means of a yaw control system for adjusting an orientation of the nacelle by rotation around a vertical yaw axis.

The rotor is rotatably arranged inside the nacelle by means of a bearing system. The rotor blades are attached to an end section of the rotor, which is pointing away from the nacelle. The rotor blades are configured for being impinged by wind and thereby generating a torque on the rotor for rotating the rotor. It is preferred that the rotor blades are rotatable attached to the rotor around a longitudinal axis of the rotor blades for controlling a degree of impingement by the wind. Preferably, the rotor is mechanically connected to a power axle of the generator by means of a gear box.

The generator is arranged inside the nacelle and is configured to convert rotational energy into electric energy. Preferably, the wind turbine comprises a brake unit for braking the power axle of the generator on demand.

The hydrogen inlet is configured for receiving the hydrogen from the hydrogen import pipe at the first pressure. According to the invention, more hydrogen inlets can be provided. The hydrogen import pipe is a pipe for transporting hydrogen generated by one or more hydrogen generating wind turbines of the same wind farm. The hydrogen inlet is preferably located at the tower below the nacelle, especially closer to a surface level of the wind turbine, e.g., a ground level for an onshore wind turbine or a water level of an offshore wind turbine, than to the nacelle. Preferably, the hydrogen inlet is located at a tower wall of the tower, wherein a hydrogen inlet duct is arranged inside the tower for transporting the hydrogen from the hydrogen inlet to the compressor unit. The hydrogen inlet duct is preferably configured for receiving the hydrogen from the hydrogen inlet at the first pressure. Alternatively, the hydrogen inlet can be arranged at a housing wall of a compressor system housing of the compressor system.

The hydrogen outlet is configured for discharging hydrogen into the hydrogen export pipe at the second pressure. According to the invention, more hydrogen outlets can be provided. It is preferred that the amount of hydrogen inlets is the same or greater than the amount of hydrogen outlets. The hydrogen outlet is preferably located at the same or at least at a similar height as the hydrogen inlet with respect to the height extension of the tower. Preferably, the hydrogen outlet is located adjacent to the hydrogen inlet. The export pipe is a pipe for exporting hydrogen from the wind farm to a hydrogen filling station of the wind farm, an external hydrogen grid, an external hydrogen tank, an external hydrogen filling station or the like.

The compressor system is preferably located inside the tower or inside a compressor system housing outside a tower wall of the tower. The compressor system comprises the compressor unit, which is in fluid communication with the hydrogen inlet and the hydrogen outlet. The compressor unit is configured for receiving hydrogen from the hydrogen inlet at the first pressure, increasing the pressure of the hydrogen from the first pressure to the second pressure and discharging the hydrogen towards the hydrogen outlet at the second pressure. The compressor system may comprise further ancillary units, such as fuel cells, batteries, electrical control and conversion modules, switchgear units, control units, communication units, sensor units, safety valves or the like.

Furthermore, the compressor system is preferably electrically coupled to the generator for receiving electrical energy for operation. Advantageously, the compressor system is configured for being electrically coupled to a power grid and/or a generator of another wind turbine. Furthermore, a fuel cell can be provided for producing electric energy for operating the compressor unit. The fuel cell is preferably in fluid communication with the hydrogen inlet, another hydrogen pipe, hydrogen tank or the like.

Preferably, the first pressure can vary within a first pressure range. The second pressure is greater than the first pressure. It is preferred that the second pressure can vary within a second pressure range.

A wind turbine according to the invention has the advantage over conventional wind farm setups with wind turbines and separated compressor systems that in a simple and inexpensive way, the task of increasing the hydrogen pressure for the export pipe is integrated within the wind turbine. An additional arrangement for a compressor system with extra foundations, platforms or the like is not necessary anymore. Moreover, the compressor unit can be powered by means of the electric energy, which is generated by the wind turbine itself. By these means, the operation of the compressor unit is not dependent on an external power supply.

According to a preferred further development of the invention, a wind turbine can provide that the compressor system comprises a gas treatment unit for cleaning and/or drying the hydrogen. Due to imperfect working conditions, deterioration of the electrolyzer, pipes or the like, the hydrogen entering the hydrogen inlet may be contaminated with particles, moist or the like. Therefore, it is preferred that the impurity is extracted from the hydrogen before sending it to the hydrogen export pipe. This has the advantage that in a simple and inexpensive way, the quality of the hydrogen provided by the wind turbine is increased.

It is preferred according to the invention that the compressor unit comprises a mechanical compressor unit and/or an electrochemical compressor unit. A mechanical compressor unit is preferably configured as a piston compressor, a screw compressor or a centrifugal compressor for compressing the hydrogen. An electrochemical compressor unit is preferably configured as a multi-stage electrochemical hydrogen compressor, which incorporates membrane-electrode-assemblies (MEAs) separated by proton exchange membranes (PEMs) in series to reach higher pressures. When a current is passed through the MEA, protons and electrons are generated at the anode. The protons are electrochemically driven across the membrane to the cathode, after which they combine with the rerouted electrons to form hydrogen, which is fed to the hydrogen compressor to be oxidized at the anode of each cell to form protons and electrons. This has the advantage that in a simple and inexpensive way, a desired compression rate can be realized.

More preferred, the compressor system comprises a plurality of compressor units, wherein the compressor units are connected in series and/or parallel. By a connection in series, a multi-stage compression of the hydrogen from the first pressure to the second pressure with one or more compression steps over intermediate pressures can be realized. Thus, smaller compressor units can be used. By a connection in parallel, an overall hydrogen volume flow of the compressor system can be increased. Moreover, a redundancy is provided for compensation of a faulty compressor unit. This has the advantage that in a simple and inexpensive way, the reliability of the wind turbine for compressing hydrogen is improved.

Preferably, the wind turbine is configured as an offshore wind turbine and the compressor system or at least the compressor unit is located on top of a transition platform of the tower. Moreover, it is preferred, that other components of the wind turbine, e.g. a gas filter device and/or an auxiliary device and/or an electrical module and/or a control device and/or a communication device and/or a battery or the like, are located on the transition platform. This has the advantage that in a simple and inexpensive way, the reliability of the wind turbine for compressing hydrogen is improved.

According to a preferred embodiment of the invention, the wind turbine is configured as an offshore wind turbine and the compressor system or at least the compressor unit is located on a floating foundation of the wind turbine. Furthermore, it is preferred, that other components of the wind turbine, e.g. a gas filter device and/or an auxiliary device and/or an electrical module and/or a control device and/or a communication device and/or a battery or the like, are located on the floating platform. This has the advantage that in a simple and inexpensive way, the reliability of the wind turbine for compressing hydrogen is improved.

In a particularly preferred embodiment, the compressor system is configured to frequently determine a required export pipe pressure and to adjust the second pressure to the determined required export pipe pressure. Thus, the second pressure is considered as a variable pressure. The required export pipe pressure can be dependent on requirements of the operator of a pipeline that the hydrogen is discharged to. Moreover, the required export pipe pressure can be dependent on the actual hydrogen production of the wind farm, the first pressure or the like. For determining the required export pipe pressure, the compressor system preferably comprises a communication interface. The communication interface may comprise a radio receiver, a radio transmitter or the like for data exchange with other wind turbines, especially of the same wind farm, a wind farm control center, a pipeline control center or the like. This has the advantage that in a simple and inexpensive way, the operation of the compressor system can be enhanced with respect to changing pressure requirements. Furthermore, by these means, sufficient hydrogen flow can be ensured.

Preferably the compressor system further comprises a first pressure sensor for measuring the first pressure, wherein the compressor system is configured to determine the second pressure based on the measured first pressure. The first pressure may vary due to several reasons, such as different wind speeds, defect or maintained wind turbines, leakages or the like. As already mentioned before, the second pressure can be dependent on requirements of the operator of the pipeline as well as the first pressure. The first pressure sensor is preferably arranged at or near the hydrogen inlet. Preferably, the compressor system comprises a second pressure sensor for measuring the second pressure. Advantageously, the second pressure sensor is arranged at or near the hydrogen outlet. The compressor system is preferably configured to keep the second pressure as low as possible, wherein all requirements for the second pressure are fulfilled. This has the advantage that in a simple and inexpensive way, the operation of the compressor system can be further enhanced with respect to changing pressure requirements. Furthermore, by these means, sufficient hydrogen flow can be ensured. Furthermore, the hydrogen flow from the whole wind farm including the compressors can be controlled to minimize energy loss in the gas infrastructure and ensure sufficient flow from all gas producing turbines.

According to a preferred embodiment of the invention, the wind turbine comprises an electrolyzer, wherein an electrolyzer hydrogen output pipe of the electrolyzer is coupled in fluid communication to a hydrogen inlet of the compressor unit. By these means, the wind turbine is configured as a hydrogen generating wind turbine. Since the compressor system requires space, in case of lack of space, the electrolyzer can be of smaller dimensions than the electrolyze of other hydrogen generating wind turbines of the same wind farm. Alternatively, the electrolyzer can be placed at a different platform than the compressor system. This has the advantage that in a simple and inexpensive way, hydrogen production of the wind farm can be increased.

According to a second aspect of the invention, the object is achieved by a hydrogen generating wind farm, comprising a plurality of wind turbines, wherein at least a first group of wind turbines of the plurality of wind turbines is configured as hydrogen generating wind turbines. According to the invention, at least a second group of wind turbines of the plurality of wind turbines is configured as wind turbines according to the first aspect of the invention.

In other words, the wind farm comprises a plurality of hydrogen generating wind turbines. Preferably, all wind turbines of the wind farm are configured as hydrogen generating wind turbines. Alternatively, all but the wind turbines according to the first aspect of the invention can be configured as hydrogen generating wind turbines. The wind turbines of the second group of wind turbines configured as wind turbines according to the first aspect of the invention comprise the compressor system. Preferably, the second group of wind turbines comprises one or two wind turbines. However, the amount of wind turbines of the second group is probably corresponding to the power of the compressor and the required power for increasing the pressure of the hydrogen, e.g., due to a distance of an offshore wind farm from the shore. Preferably, the two or more turbines are connected by array pipes.

Hydrogen output pipes of the wind turbines of the first group are in fluid communication with the hydrogen import pipe, which is in fluid communication with the hydrogen inlet and the compressor system. Thus, hydrogen produced by the first group of wind turbines can be compressed from the first pressure to the second pressure by means of the compressor units of the second group of wind turbines. The wind turbines of the second group are preferably located centrally in the wind farm. Preferably one of the wind turbines of the second group serves as a connection hub to the hydrogen export pipe. In that case, the other wind turbines of the second group are configured to discharge the hydrogen of the second pressure to the connection hub.

The hydrogen generating wind farm according to the invention has all the advantages that have already been described for a wind turbine according to the first aspect of the invention. Accordingly, the hydrogen generating wind farm according to the invention has the advantage over conventional hydrogen generating wind farms that in a simple and inexpensive way, the task of increasing the hydrogen pressure for the export pipe is integrated within a wind turbine. An additional arrangement for a compressor system with extra foundations, platforms or the like is not necessary anymore. Moreover, the compressor unit can be powered by means of the electric energy, which is generated by the wind turbine itself. By these means, the operation of the compressor unit is not dependent on an external power supply.

Particularly preferred, at least a first wind turbine of the second group is connected with a power supply line of the wind farm to power the compressor system, wherein the power supply line is powered by at least a second wind turbine of the wind farm. The second wind turbine can be of the first group or the second group. Preferably, all wind turbines of the second group are connected with the power supply line. Alternatively, the power supply line can be powered by a wind turbine of a third group of the wind farm, wherein the wind turbine of the third group is configured for generating electricity and does not comprise an electrolyzer or a compressor. This has the advantage that in a simple and inexpensive way, the power supply of the compressor can be assured, e.g., in case the respective wind turbine of the second group is not working or under maintenance.

It is preferred that a hydrogen outlet of a first relay wind turbine of the second group is connected in fluid communication with a hydrogen inlet of second relay wind turbine of the second group. Thus, the hydrogen can be compressed in two stages. Firstly, the hydrogen can be compressed by the first relay wind turbine to a first pressure. Secondly, the hydrogen can be compressed by the first relay wind turbine from the first pressure to a higher second pressure. This has the advantage that in a simple and inexpensive way, the compression of the hydrogen can be improved. Moreover, the dimensions of the compressor units can be reduced due to multiple compressor stages.

It is further preferred that a distance between the first relay wind turbine and the second relay wind turbine is larger than an average distance between the first relay wind turbine and the wind turbines of the first group of wind turbines. In a preferred configuration of the wind farm, the first relay wind turbine is located within the first group of wind turbines of the wind farm or at a border area of the first group. The second relay wind turbine, however, is located several kilometers spaced apart from the first group and the first relay wind turbine. This has the advantage that in a simple and inexpensive way, the compression of the hydrogen can be improved. Moreover, a pressure loss of the hydrogen can be compensated.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic front view of a wind turbine according to a preferred first embodiment of the invention,
Figure 2 shows a schematic sectional top view of the wind turbine of figure 1,
Figure 3 shows a schematic sectional top view of a wind turbine according to a preferred second embodiment of the invention,
Figure 4 shows a schematic sectional top view of a wind turbine according to a preferred third embodiment of the invention,
Figure 5 shows a schematic perspective view of the wind turbine of figure 1,
Figure 6 shows a schematic layout view of a wind farm according to a preferred first embodiment of the invention,
Figure 7 shows a schematic layout view of a wind farm according to a preferred second embodiment of the invention, and
Figure 8 shows a schematic layout view of a wind farm according to a preferred third embodiment of the invention.

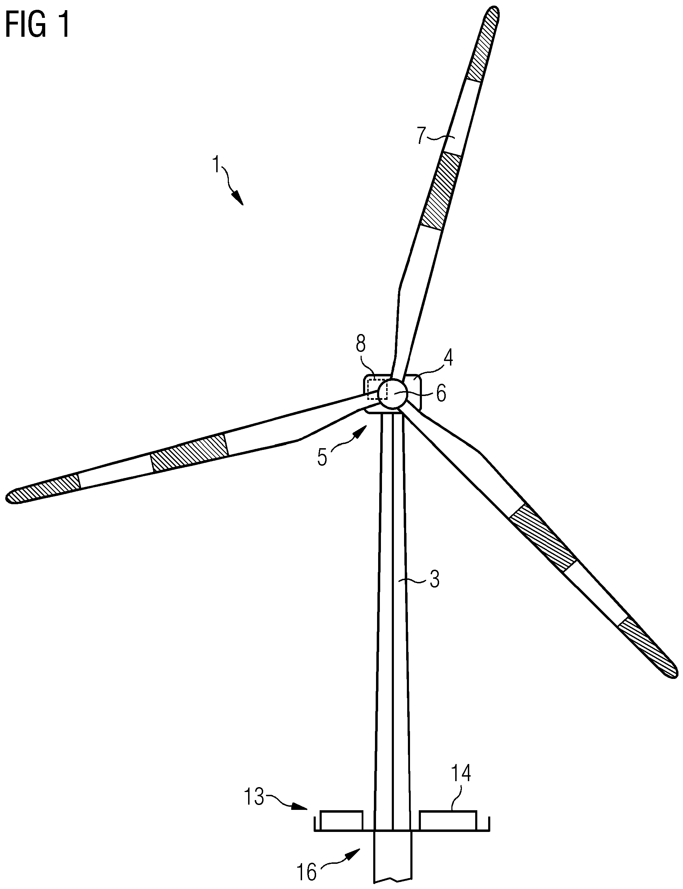

Elements with the same function and effectiveness are denoted each in figs. 1 - 8 with the same reference numbers.

In fig. 1, a wind turbine 1 according to a preferred first embodiment of the invention is shown in a schematic front view. The wind turbine comprises a tower 3 with a top end 5 and a transition platform 16 at a lower region of the tower 3. A nacelle 4 is rotatably attached to the top end 5. A rotor 6 is rotatably attached at the nacelle 4. At a front end of the rotor 6, three rotor blades 7 are attached. A generator 8 for transforming rotational energy of the rotor 6 into electric energy is located within the nacelle 4. On the transition platform 16, a compressor system 13 with a compressor unit 14 for increasing the pressure of received hydrogen from a first pressure to a second pressure is arranged.

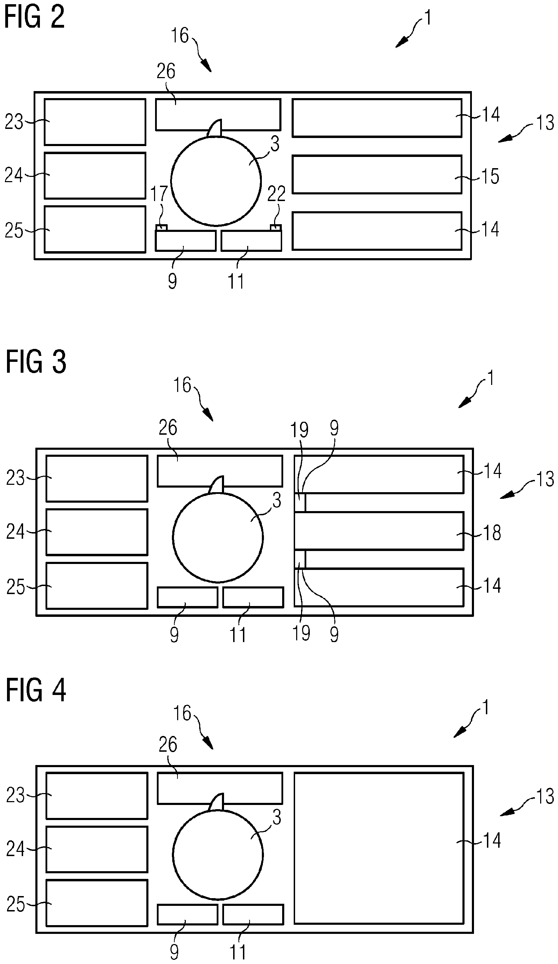

In fig. 2, the wind turbine 1 of fig. 1 is shown in a schematic sectional top view. In this figure, the transition platform 16 is shown, wherein an upper part of the wind turbine 1 is cut off. On the transition platform 16, a hydrogen inlet 9 for receiving hydrogen at the first pressure from other hydrogen generating wind turbines 1 and a hydrogen outlet 11 are provided. At the hydrogen inlet 9, an optional first pressure sensor 17 for measuring the hydrogen pressure of the incoming hydrogen is provided. At the hydrogen outlet 11, an optional second pressure sensor 21 for measuring the hydrogen pressure of the outgoing hydrogen is provided.

Furthermore, a compressor system 13 with two compressor units 14, a gas treatment unit 15, a switchgear & control unit 23, an electrical control & conversion module 24 and an auxiliary unit 25 is provided at the transition platform 16. The auxiliary unit 25 may comprise a fuel cell (not shown) and/or a battery (not shown). A part of the transition platform 16 is configured as a maintenance platform 26 for service workers.

In fig. 3, a wind turbine 1 according to a preferred second embodiment of the invention is shown in a schematic sectional top view. In this figure, the transition platform 16 is shown, wherein an upper part of the wind turbine 1 is cut off. On the transition platform 16, a hydrogen inlet 9 for receiving hydrogen at the first pressure from other hydrogen generating wind turbines 1 and a hydrogen outlet 11 are provided. An optional first pressure sensor 17 (not shown) and second pressure sensor 21 (not shown) can be provided on demand.

Moreover, a compressor system 13 with two compressor units 14, an electrolyzer 18, a switchgear & control unit 23, an electrical control & conversion module 24 and an auxiliary unit 25 is provided at the transition platform 16. Electrolyzer hydrogen output pipes 19 of the electrolyzer 18 are in fluid communication with the hydrogen inlets 9 of the compressor units 14. The auxiliary unit 25 may comprise a fuel cell (not shown) and/or a battery (not shown). A part of the transition platform 16 is configured as a maintenance platform 26 for service workers.

In fig. 4, a wind turbine 1 according to a preferred third embodiment of the invention is shown in a schematic sectional top view. In this figure, the transition platform 16 is shown, wherein an upper part of the wind turbine 1 is cut off. On the transition platform 16, a hydrogen inlet 9 for receiving hydrogen at the first pressure from other hydrogen generating wind turbines 1 and a hydrogen outlet 11 are provided. An optional first pressure sensor 17 (not shown) and second pressure sensor 21 (not shown) can be provided on demand.

Beyond that, a compressor system 13 with a large compressor unit 14, a switchgear & control unit 23, an electrical control & conversion module 24 and an auxiliary unit 25 is provided at the transition platform 16. The auxiliary unit 25 may comprise a fuel cell (not shown) and/or a battery (not shown). A part of the transition platform 16 is configured as a maintenance platform 26 for service workers.

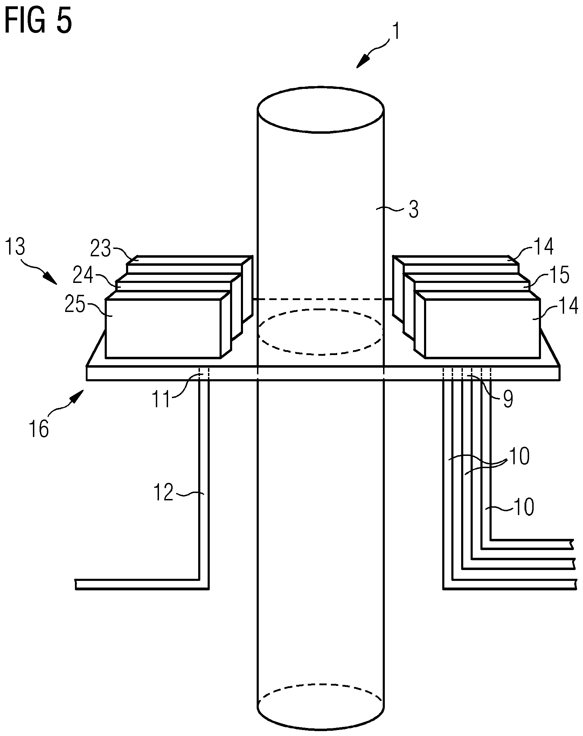

Fig. 5 shows the wind turbine 1 of fig. 1 in a schematic perspective view. A plurality of hydrogen import pipes 10 is in fluid communication with the hydrogen inlet 9. A single hydrogen export pipe 12 is in fluid communication with the hydrogen outlet 11.

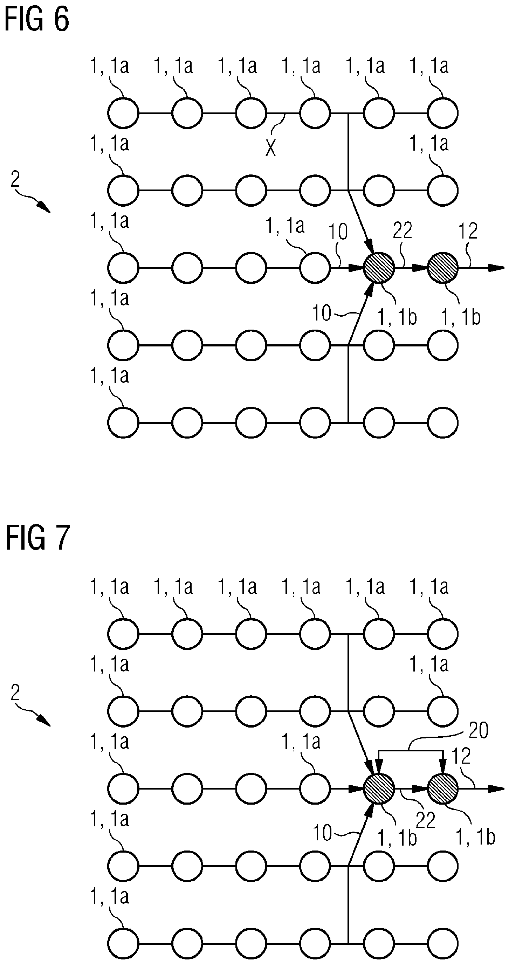

Fig. 6 shows a wind farm 2 according to a preferred first embodiment of the invention in a schematic layout view. The wind farm comprises a plurality of wind turbines 1, wherein a first group 1a of the wind turbines is configured as hydrogen generating wind turbines 1 without a compressor system 13. A second group 1b of the wind turbines 1 comprises two wind turbines 1 with a compressor system 13 each. The wind turbines 1 of the second group 1b are connected with the wind turbines 1 of the first group 1a by hydrogen import pipes 10 and interconnected by an intermediate hydrogen pipe 22. Thus, hydrogen from the first group 1a is flowable to a first wind turbine 1 of the second group 1b at the first pressure, can be compressed by the first wind turbine 1 to an intermediate pressure, sent to the second wind turbine 1 through the intermediate hydrogen pipe 22, further compressed by the second wind turbine 1 to the second pressure and discharged to the hydrogen export pipe 12. The first wind turbine 1 and the second wind turbine 1 are configured for generating the electric energy for operating the compressor system 13. The first wind turbine 1 and the second wind turbine 1 can be located adjacent to each other, e.g., being located within the same wind farm, or further spaced apart, e.g., with a distance of about 50 km.

Fig. 7 shows a wind farm 2 according to a preferred second embodiment of the invention in a schematic layout view. The wind farm 2 according to the preferred second embodiment of the invention differs from the wind farm 2 according to the preferred first embodiment of the invention in an additional power supply line 20 for providing electric energy within the wind turbines 1 of the second group 1b to operate the respective compressor system 13, in case the respective wind turbine 1 is not able to provide electric energy by itself, e.g., in case of maintenance or defects.

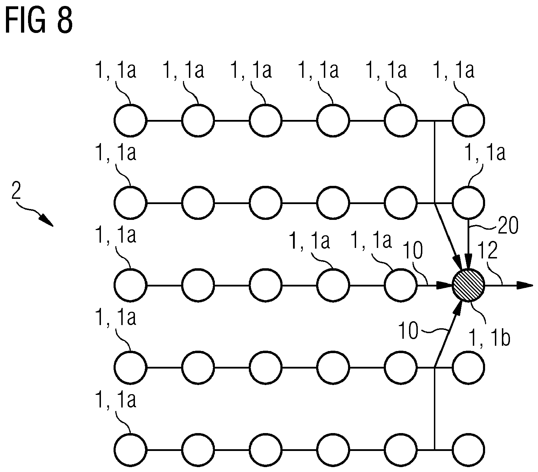

Fig. 8 shows a wind farm 2 according to a preferred third embodiment of the invention in a schematic layout view. The wind farm 2 according to the preferred third embodiment of the invention differs from the wind farm 2 according to the preferred second embodiment of the invention in the amount of wind turbines 1 of the second group 1b. The second group 1b comprises only one wind turbine 1, and the power supply line 20 for providing electric energy to operate the compressor system 13 is connected to a wind turbine 1 of the first group 1a.

## Claims

1. Wind turbine (1) for a hydrogen generating wind farm (2), comprising a tower (3), a nacelle (4) rotatably attached to a top end (5) of the tower (3), a rotor (6), rotatably located within the nacelle (4), rotor blades (7) attached to the rotor (6) for being impinged by wind to generate rotation of the rotor (6) and a generator (8) mechanically coupled to the rotor (6) for transforming rotational energy of the rotor (6) into electrical energy,
wherein the wind turbine (1) further comprises a hydrogen inlet (9) for receiving hydrogen from a hydrogen import pipe (10) at a first pressure, a hydrogen outlet (11) for discharging hydrogen into a hydrogen export pipe (12) at a second pressure and a compressor system (13) with a compressor unit (14) for increasing the pressure of the hydrogen from the first pressure to the second pressure.

2. Wind turbine (1) according to claim 1,
wherein the compressor system (13) comprises a gas treatment unit (15) for cleaning and/or drying the hydrogen.

3. Wind turbine (1) according to claim 1 or 2,
wherein the compressor unit (14) comprises a mechanical compressor unit (14) and/or an electrochemical compressor unit (14).

4. Wind turbine (1) according to any of the previous claims, wherein the compressor system (13) comprises a plurality of compressor units (14), wherein the compressor units (14) are connected in series and/or parallel.

5. Wind turbine (1) according to any of the previous claims, wherein the wind turbine (1) is configured as an offshore wind turbine (1) and the compressor system (13) or at least the compressor unit (14) is located on top of a transition platform (16) of the tower (3).

6. Wind turbine (1) according to any of the claims 1 to 4, wherein the wind turbine (1) is configured as an offshore wind turbine (1) and the compressor system (13) or at least the compressor unit (14) is located on a floating foundation of the wind turbine (1).

7. Wind turbine (1) according to any of the previous claims, wherein the compressor system (13) is configured to frequently determine a required export pipe pressure and to adjust the second pressure to the determined required export pipe pressure.

8. Wind turbine (1) according to any of the previous claims, wherein the compressor system (13) further comprises a first pressure sensor (17) for measuring the first pressure, wherein the compressor system (13) is configured to determine the second pressure based on the measured first pressure.

9. Wind turbine (1) according to any of the previous claims, wherein the wind turbine (1) comprises an electrolyzer (18), wherein an electrolyzer hydrogen output pipe (19) of the electrolyzer (18) is coupled in fluid communication to the hydrogen inlet (9) of the compressor unit (14).

10. Hydrogen generating wind farm (2), comprising a plurality of wind turbines (1), wherein at least a first group (1a) of wind turbines (1) of the plurality of wind turbines (1) is configured as hydrogen generating wind turbines (1),
wherein at least a second group (1b) of wind turbines (1) of the plurality of wind turbines (1) is configured as wind turbines (1) according to any of the previous claims.

11. Hydrogen generating wind farm (2) according to claim 10, wherein at least a first wind turbine (1) of the second group (1b) is connected with a power supply line (20) of the wind farm (2) to power the compressor system (13), wherein the power supply line (20) is powered by at least a second wind turbine (1) of the wind farm (2).

12. Hydrogen generating wind farm (2) according to claim 10 or 11,
wherein a hydrogen outlet (11) of a first relay wind turbine (1) of the second group (1b) is connected in fluid communication with a hydrogen inlet (9) of second relay wind turbine (1) of the second group (1b).

13. Hydrogen generating wind farm (2) according to claim 12, wherein a distance between the first relay wind turbine (1) and the second relay wind turbine (1) is larger than an average distance between the first relay wind turbine (1) and the wind turbines (1) of the first group (1a) of wind turbines (1).
